# EUROPÄISCHE PATENTSCHRIFT

(11) **EP 0 494 608 B1**
(45) Veröffentlichungstag und Bekanntmachung des Hinweises auf die Patenterteilung: **26.07.1995**
(21) Anmeldenummer: 92100070.9
(22) Anmeldetag: 03.01.1992
(51) Int. Cl.: F16D 48/02

(54) **Anordnung zur Regelung des Schlupfs einer automatisierten Reibungskupplung**
Arrangement to control the slip in an automated friction clutch
Ensemble pour commander le glissement dans un embrayage à friction automatisé

(30) Priorität: 09.01.1991 DE 4100372
(43) Veröffentlichungstag der Anmeldung: 15.07.1992
(73) Patentinhaber: Fichtel & Sachs AG, D-97419 Schweinfurt (DE)
(72) Erfinder: Schmidt-Brücken, Hans-Joachim, Dipl.-Phys., W-8721 Geldersheim (DE); Kuhn, Thomas, Dipl.-Ing.(FH), W-8730 Bad Kissingen (DE)
(74) Vertreter: Liska, Horst, Dr.-Ing.

(56) Entgegenhaltungen:
- EP-A- 0 059 035
- EP-A- 0 137 247
- EP-A- 0 198 694
- WO-A-90/05866
- DE-A- 3 926 236
- PATENT ABSTRACTS OF JAPAN vol. 9, no. 311 (M-436)(2034) 7. Dezember 1985 & JP-A-60 146 923 (ISUZU JIDOSHA K.K.) 2. August 1985

## Beschreibung

Die Erfindung betrifft eine Anordnung zur Regelung des Schlupfs einer zwischen Motor und Getriebe eines Kraftfahrzeugs angeordnete, automatisierten Reibungskupplung gemäß dem Oberbegriff des Anspruchs 1. Unter einem anderen Aspekt betrifft die Erfindung eine Anordnung zur Korrektur von in einem Datenspeicher für die Steuerung einer solchen Reibungskupplung gespeicherten Daten, gemäß dem Oberbegriff des Anspruchs 8.

Es ist bekannt, herkömmliche zwischen Motor und Getriebe eines Kraftfahrzeugs angeordnete Reibungskupplungen über einen Positionierantrieb ein- bzw. auszukuppeln, der die Kupplung abhängig von einem Sollwert-Istwert-Vergleich auf eine durch ein Positions-Sollsignal vorgebbare Position einstellt. Das Positions-Sollsignal wird für den automatisierten Betrieb der Kupplung von einer Steuerung der Fahrsituation des Kraftfahrzeugs entsprechend erzeugt. Die Steuerung kann ihre Einkuppelcharakteristik hierbei in bekannter Weise den sich unterscheidenden Anforderungen beim Anfahren des Kraftfahrzeugs bzw. beim Wechseln der Gänge des Getriebes anpassen.

Aus der DE-A-34 38 594 ist es bekannt, den Schlupf der Kupplung mittels einer Schlupfregelschaltung auf einem vorgegebenen Schlupf-Sollwert zu halten, und zwar auch unabhängig von der den Ein- und Auskuppelbetrieb steuernden Kupplungssteuerung. Die Schlupfregelschaltung kann einerseits zur Minderung von Drehschwingungen im Antriebsstrang des Kraftfahrzeugs ausgenutzt werden, indem zum Beispiel abhängig von der Motordrehzahl ein mit dieser Drehzahl verglichen kleiner Schlupf zugelassen wird. Andererseits kann die Schlupfregelschaltung in der Endphase des Einkuppelvorgangs wirksam gemacht werden, um besonders weiches und ruckfreies Einkuppeln zu erreichen.

Bei der bekannten Schlupfregelschaltung werden die Eingangsdrehzahl und die Ausgangsdrehzahl der Kupplung mit Hilfe von Drehzahlsensoren gemessen, und eine Mittelungsschaltung erzeugt eine dem zeitlichen Mittelwert der Differenz zwischen diesen Drehzahlen entsprechendes Mittelwertsignal, welches die Schlupfregelschaltung mit einem die momentane Differenz repräsentierenden Signal vergleicht. Die Schlupfregelschaltung erzeugt abhängig von diesem Vergleich das den Positionierantrieb einstellende Positions-Sollsignal. Die Regelgenauigkeit der bekannten Schlupfregelschaltung reicht in der Praxis vielfach nicht aus, wenn kleine Drehzahldifferenzen zwischen Eingangs- und Ausgangsdrehzahl der Kupplung von beispielsweise 1 bis 2 % der Eingangsdrehzahl geregelt werden sollen. Insbesondere kann es bei der bekannten Schlupfregelschaltung bei einer Änderung der Leistungsanforderung des Motors, beispielsweise aufgrund einer Änderung der Fahrpedalstellung, zu großen Schwankungen der Differenzdrehzahl kommen. Die bekannte Schlupfregelschaltung kann bei einem Lastwechsel nur begrenzt und vergleichsweise langsam folgen.

Es ist Aufgabe der Erfindung, eine Anordnung zur Regelung des Schlupfs einer automatisierten Reibungskupplung anzugeben, über die sowohl bei stationärem Betrieb als auch bei einem Lastwechsel ein vorbestimmbarer Schlupf mit hoher Regelgüte eingehalten werden kann.

Die Erfindung geht von einer Schlupfregelanordnung aus, die einen die Kupplung abhängig von einem Positions-Sollsignal auf eine durch das Positions-Sollsignal definierte Position einstellenden Positionierantrieb und Drehzahlsensoren umfaßt, die die Kupplungseingangsdrehzahl bzw. die Kupplungsausgangsdrehzahl erfassen. Eine Schlupfregelanordnung erzeugt das Positions-Sollsignal abhängig von der momentanen Differenz zwischen Kupplungseingangsdrehzahl und Kupplungsausgangsdrehzahl derart, daß die momentane Drehzahldifferenz gleich einer vorgegebenen Drehzahl-Solldifferenz ist. Zur Erzielung einer hohen Regelgüte der Schlupfregeleinrichtung ist dieser ein Kupplungskennlinienspeicher zugeordnet, der das Positions-Sollsignal in Form einer Kennlinie in Abhängigkeit von Daten speichert, die das von der Kupplung in der Sollposition übertragene Drehmoment repräsentieren. Der Kupplungskennlinienspeicher erzeugt das Positions-Sollsignal entsprechend dem Wert des von einer Drehmoment-Ermittlungseinrichtung ermittelten momentanen Drehmoments des Motors, wobei die Schlupfregeleinrichtung das Positions-Sollsignal des Kupplungskennlinienspeichers einem von ihrem Regler erzeugten Regelungs-Signalanteil überlagert.

Bei einer solchen Schlupfregeleinrichtung wird das Positions-Sollsignal dem Regelungs-Signalanteil in Form einer Störgröße überlagert, die die Kupplung in eine Position stellt, bei der das von der Kupplung übertragene Drehmoment im wesentlichen gleich dem vom Motor erzeugten Drehmoment ist. Das Drehmoment des Motors wird gemessen oder aber aus gespeicherten Kennfelddaten bzw. Steuerungsdaten des Motors errechnet und bestimmt im Kupplungskennlinienspeicher die diesem Drehmoment zugeordnete Position des Kupplungsausrückers. Lastwechsel des Motors, beispielsweise aufgrund einer Änderung der Fahrpedalposition sorgen so für eine Voreinstellung der Kupplungsposition, so daß die Schlupfregeleinrichtung bei korrekter Einstellung des Kennlinienspeichers und korrekter Ermittlung des Drehmoments des Motors quasi stationäre Verhältnisse vorfindet. Der Korrektureingriff erfolgt unmittelbar, und es müssen keine Regelabweichungen am Ausgang der Regelstrecke abgewartet werden. Insgesamt läßt sich damit eine sehr hohe Regelgenauigkeit erzielen.

Zweckmäßigerweise wird ein Regler mit integrierenden Eigenschaften verwendet. Dies erlaubt eine asymptotische Annäherung des Schlupf-Istwerts an den Schlupf-Sollwert und vermeidet endliche stationäre Regelabweichungen. Als besonders günstig hat sich ein Proportional-Integral-Differential-Regler erwiesen. Mittels eines solchen Reglers lassen sich in einem besonders großen Kupplungsmomentbereich Regelinstabilitäten verhindern. Dies ist in erster Linie auf den Differentialanteil des Reglers zurückzuführen.

Bei sehr hohen Parametern der Regelcharakteristik, insbesondere hohem Proportionalanteil, die für eine hohe Regelgüte wünschenswert sind, kann es im Antriebsstrang des Kraftfahrzeugs vorwiegend in niedrigen Gängen zu Schwingungen kommen. Diese mit der ersten Eigenfrequenz des Antriebsstrangs angeregten Schwingungen von etwa 10 Hz äußern sich als "Rupfen" der Kupplung. Um dies zu verhindern, wird der Regelungs-Signalanteil des Reglers zweckmäßigerweise über ein Filter geführt, welches Frequenzen mit der ersten Eigenfrequenz des Antriebsstrangs eliminiert. Das Filter kann im einfachsten Fall durch eine Mittelwertbildung realisiert werden. Zweckmäßigerweise werden die Parameter des Reglers und des Filters abhängig von den momentan am Getriebe eingestellten Gängen variiert.

In einer zweckmäßigen Ausgestaltung der Erfindung umfaßt die Drehmoment-Ermittlungseinrichtung einen Motorkennlinienspeicher, der die das Drehmoment repräsentierenden Daten abhängig von dem die Motordrehzahl erfassenden Drehzahlsensor und einem die Stellung eines Leistungsstellglieds des Motors, insbesondere eines Fahrpedals, erfassenden Positionssensor abgibt. Bei einer solchen Ausgestaltung kann sich der Aufbau des tatsächlich vom Motor erzeugten Drehmoments gegenüber der Einstellung der Kupplung auf das durch die Einstellung des Leistungsstellglieds vorgegebene Moment kurzzeitig verzögern, so daß die Kupplung zum Beispiel bereits zugestellt wird, bevor das Motormoment seinen neuen Wert tatsächlich annimmt. Dies führt zu einem unerwünschten kurzzeitigen Absinken der Differenzdrehzahl. Um diesen Effekt zu vermeiden, kann am Eingang oder am Ausgang des Motorkennlinienspeichers ein Zeitverzögerungsglied vorgesehen sein.

Im Rahmen des vorstehend erläuterten Aspekts der Erfindung wird die Kupplung im Sinne einer Störgrößenaufschaltung abhängig von dem tatsächlichen momentanen Drehmoment des Motors additiv zur Schlupfregelung positioniert, und zwar so, daß das Kupplungsmoment gleich dem Motormoment ist. Diese Betriebsweise setzt voraus, daß die in dem Kupplungskennlinienspeicher gespeicherten Daten die Drehmoment-Sollposition-Charakteristik der Kupplung korrekt wiedergeben. Diese Charakteristik kann sich abhängig von der Erwärmung und dem Verschleiß der Kupplung im Fahrbetrieb ändern, und zwar hinsichtlich des Schleifpunkts der Kupplung, d.h. der Grenzposition beginnender Drehmomentübertragung der Kupplung, als auch hinsichtlich des Verlaufs der Kennlinie, der sich abhängig von der Reibwerten der Kupplung über deren Lebensdauer ändern kann.

Aus der DE-A-31 16 455 ist es für eine automatisierte Reibungskupplung eines Kraftfahrzeugs bekannt, Einflüsse der vorstehenden Art dadurch zu kompensieren, daß das Positions-Sollsignal für den Schleifpunkt in einem Bezugsspeicher gespeichert ist und von einer Korrektureinrichtung von Zeit zu Zeit aktualisiert wird. Für die Korrektur wird die Antriebsleistung des Positionierantriebs der Kupplung soweit verringert, daß der Positionierantrieb nicht mehr in der Lage ist, die Kupplung vollständig auszukuppeln. Der Positionierantrieb bleibt damit in einer durch den momentanen Verschleißzustand der Kupplung bestimmten Position stehen, wobei die Stillstandsposition ein Maß für den aktuellen Schleifpunkt ist. Die Korrektur setzt bei der bekannten Anordnung jedoch eine spezielle Betriebsart voraus und wird in der Regel bei Inbetriebnahme des Kraftfahrzeugs durchgeführt. Eine kontinuierliche Überprüfung der Daten eines Kupplungskennlinienspeichers ist nicht möglich. Auch ist die Genauigkeit der bekannten Anordnung für eine Vielzahl Anwendungsfälle unzureichend.

Ein zweiter Aspekt der Erfindung, der auch unabhängig von der vorstehend erläuterten Schlupfregelanordnung von Bedeutung für die Korrektur von Daten in einem Kupplungskennlinienspeicher einer automatisierten Kupplung ist, soll eine vergleichsweise genaue Korrektur gespeicherter Kupplungs-Positionierdaten ermöglichen. Die Daten sollen sich auch während des Fahrbetriebs korrigieren lassen.

Die Merkmale des zweiten Aspekts der Erfindung sind in Anspruch 8 angegeben. Auch unter dem zweiten Aspekt der Erfindung sind Drehzahlsensoren vorgesehen, die die Eingangsdrehzahl und die Ausgangsdrehzahl der Kupplung erfassen, und es ist eine Schlupfregeleinrichtung vorgesehen, die die momentane Differenzdrehzahl zwischen erfaßter Eingangsdrehzahl und erfaßter Ausgangsdrehzahl der Kupplung für die Korrektur der gespeicherten Daten auf einem vorgegebenen Schlupf-Sollwert hält. Die Schlupfregeleinrichtung weist einen Regler mit integrierendem Reglercharakteristikanteil auf, der dem Positions-Sollsignal des Datenspeichers einen Regelungs-Signalanteil überlagert. Eine Korrektureinrichtung korrigiert das in dem Datenspeicher gespeicherte Positions-Sollsignal so, daß der Integralanteil des dem Positions-Sollsignal überlagerten Regelungs-Signalanteils zumindest annähernd null ist. Der zweite Aspekt der Erfindung geht von der Überlegung aus, daß bei korrekten Daten in dem Datenspeicher die stationäre Kupplungsposition durch das in dem Speicher gespeicherte Positions-Sollsignal korrekt vorgegeben ist. Der Integralanteil am Ausgang des Reglers muß deshalb gleich null sein. Weicht der Integralanteil von null ab, so kann dies zu einer beispielsweise schrittweisen Korrektur des gespeicherten Positions-Sollsignals ausgenutzt werden, beispielsweise in der Form, daß dem Positions-Sollsignal ein Bruchteil des Integralanteils am Ausgang des Reglers hinzuaddiert wird, und zwar so lange, bis der Integralanteil aufgrund der Korrektur null wird.

In der vorstehend erläuterten Weise können nicht nur einzelne Positions-Sollsignale, insbesondere für den Schleifpunkt korrigiert werden, sondern es lassen sich auch Bereiche von in einem Kupplungskennlinienspeicher gespeicherten Kennlinien korrigieren. Die Korrektur kann punktweise aufeinanderfolgend für die einzelnen Daten erfolgen; es kann aber auch die gesamte Kennlinie entsprechend einer vorbestimmten, korrigierten Position, insbesondere der Grenzposition beginnender Drehmomentübertragung, ausgerichtet werden. Bei einem abhängig vom ermittelten Motormoment adressierbaren Kennlinienspeicher lassen sich die einzelnen Motormomente im Betrieb nacheinander einstellen, so daß die Korrektureinrichtung in einer Lernbetriebsart nacheinander die Kennlinie in den Kennlinienspeicher einschreiben kann.

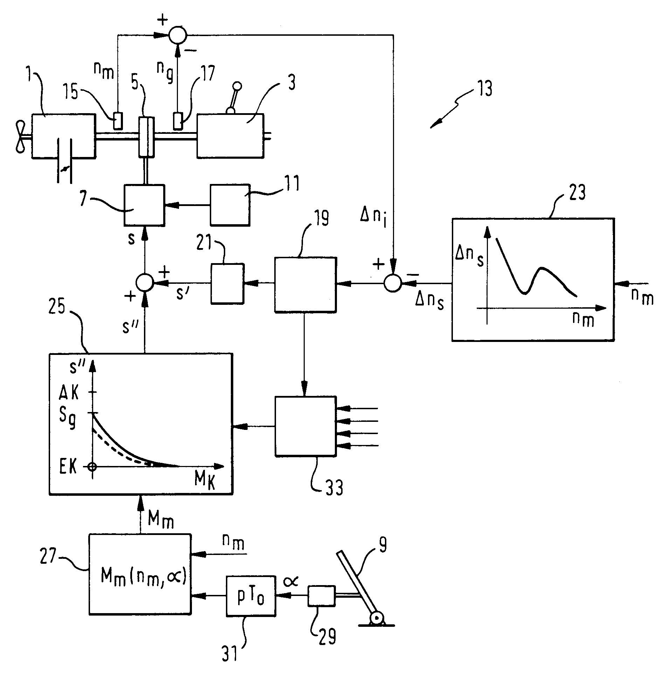

Im folgenden wird die Erfindung anhand einer Zeichnung näher erläutert. Die Zeichnung zeigt ein Blockschaltbild einer Schlupfregelanordnung für eine automatisierte Reibungskupplung eines Kraftfahrzeugs sowie eine Anordnung zur Korrektur von Daten in einem Kupplungskennlinienspeicher.

Im Antriebsweg zwischen einem Motor 1 und einem Schaltgetriebe 3 eines Kraftfahrzeugs ist eine Reibungskupplung 5 angeordnet, die von einem insbesondere elektromotorischen Positionierantrieb 7 zwischen einer vollständig eingekuppelten Position EK und einer vollständig ausgekuppelten Position AK abhängig von einem Positions-Sollsignal s positionierbar ist. Der Positionierantrieb 7 umfaßt einen nicht näher dargestellten Positionsregelkreis, der die Position eines Ausrückers der Kupplung 5 erfaßt und durch Sollwert-Istwert-Vergleich auf die durch das Positions-Sollsignal s bestimmte Position stellt. Die Leistung des Motors 1 ist in üblicher, jedoch nicht näher dargestellter Weise über ein Fahrpedal 9 änderbar. Eine Kupplungssteuerung 11 steuert den Ein- und Auskuppelbetrieb abhängig von der momentanen Fahrsituation, wobei die Einkuppelcharakteristik beim Anfahren des Kraftfahrzeugs und beim Schalten der Gänge des Getriebes 3 in vorbestimmter Weise, jedoch unterschiedlich programmgesteuert wird.

Im Betrieb können im Antriebsstrang des Kraftfahrzeugs Drehschwingungen angeregt werden. Zur Minderung der Drehschwingungen kann die Kupplung auf einen Schlupf vorbestimmter Größe eingestellt werden. Hierzu ist ein allgemein mit 13 bezeichneter Schlupfregelkreis vorgesehen. Der Schlupfregelkreis erfaßt mit einem Drehzahlsensor 15 die Motordrehzahl nₘ, d.h. die Eingangsdrehzahl der Kupplung 5, mit einem Drehzahlsensor 17, die Eingangsdrehzahl n_{g} des Getriebes 3, d.h. die Ausgangsdrehzahl der Kupplung 5 und bildet ein den Ist-Schlupf repräsentierendes Ist-Drehzahlsignal Δnᵢ, das er mit einem vorgegebenen Sollschlupf Δnₛ vergleicht. Abhängig von dem Schlupf-Istwert-Sollwert-Vergleich errechnet ein Regler 19, bei dem es sich um einen PID-Regler, also um einen Regler mit Proportional-Integral-Differential-Eigenschaften handelt, ein Positions-Sollsignal s', das über ein Filter 21 am Ausgang des Reglers 19 dem Positionierantrieb 7 zugeführt wird. Der Schlupfregelkreis 13 hält damit unabhängig von der Kupplungssteuerung 11 eine durch den Soll-Schlupf Δnₛ festgelegte Differenzdrehzahl der Kupplung 5 aufrecht.

Der Soll-Schlupf Δnₛ wird aus einem Schlupfkennlinienspeicher 23 abhängig von der Motordrehzahl nₘ ausgelesen. Der Schlupfkennlinienspeicher 23 enthält eine empirisch entsprechend dem motordrehzahlabhängigen Schwingungsverhalten des Antriebsstrangs ermittelte Schlupfkennlinie.

Die Kennlinie ist so gewählt, daß der Schlupf mit wachsender Schwingungsamplitude größer wird, zur Minderung der Belastung der Kupplung 5 jedoch so klein wie möglich gehalten ist. Es versteht sich, daß die Kennlinie den Soll-Schlupf Δnₛ auch in Abhängigkeit von der Eingangsdrehzahl des Getriebes 3 festlegen kann. Der Schlupfkennlinienspeicher 23 kann ferner von anderen Parametern abhängige Kennlinien enthalten, beispielsweise zeitabhängige Kennlinien, die am Ende eines Gangwechselvorgangs einen Übergangsschlupf für besonders weiches und ruckfreies Einkuppeln bestimmen.

Der Schlupfregelkreis 13 muß in der Lage sein, Differenzdrehzahlen in der Größenordnung von einigen wenigen Umdrehungen pro Minute, beispielsweise ± 10 Umdrehungen pro Minute in einem sehr großen Motordrehzahlbereich von einigen tausend Umdrehungen pro Minute auszuregeln. Dies stellt an die Regelgenauigkeit des Schlupfregelkreises 13 sehr hohe Anforderungen, insbesondere beim Ausregeln von Drehzahlschwankungen, die sich aufgrund eines Lastwechsels durch Ändern der Stellung des Fahrpedals 9 ergeben. Drehzahlschwankungen dieser Art können sehr große Werte annehmen. Um trotzdem eine sehr hohe Regelgenauigkeit einhalten zu können, ist dem Schlupfregelkreis 13 ein Kupplungskennlinienspeicher 25 zugeordnet, der eine Kennlinie der Kupplungscharakteristik speichert. Der Kupplungskennlinienspeicher 25 enthält Positions-Sollsignale s'' in Abhängigkeit des Kupplungsmoments M_{K}, das die Kupplung 5 in der durch das Positions-Sollsignal s'' bestimmten Stellung überträgt. Der Kupplungskennlinien-Speicher 25 wird durch den Wert des Motormoments Mₘ adressiert, welches aus einem Motorkennfeldspeicher 27 entsprechend dem Kennfeld des Motors 1 und abhängig von dessen Motordrehzahl nₘ sowie der momentanen, durch einen Positionsgeber 29 erfaßten Stellung des Fahrpedals 9 ausgelesen wird. Das auf diese Weise erhaltene Positions-Sollsignal s'' entspricht damit derjenigen Stellung der Kupplung 5, in der genau das vom Motor 1 gelieferte Moment Mₘ übertragen wird. Das Positions-Sollsignal s'' wird dem Positions-Sollsignal s' additiv im Sinne einer Störgrößenaufschaltung überlagert und bestimmt zusammen mit dem Positions-Sollsignal s' die Position, auf die der Positionierantrieb 7 die Kupplung 5 einstellt. In der durch das Positions-Sollsignal s'' bestimmten Kupplungsposition ist das von der Kupplung 5 übertragene Moment gleich dem momentanen Drehmoment des Motors 1. Die Kupplung 5 wird bei einem Lastwechsel, der sich durch eine Änderung der Fahrpedalstellung ergibt, auf das in der geänderten Fahrpedalstellung zu erwartende Drehmoment eingestellt, bevor sich die Motordrehzahl und damit der Ist-Schlupf ändern kann. Um dynamische Effekte, die sich beispielsweise daraus ergeben können, daß der Positionierantrieb 7 die Kupplung 5 rascher auf den zu erwartenden Drehmomentwert einstellt, als sich das Motordrehmoment tatsächlich aufbauen kann, ausgleichen zu können, ist zwischen den Geber 29 und den Motorkennfeldspeicher 27 ein Totzeitglied 31 geschaltet.

Die Genauigkeit, mit der die Kupplung 5 auf das bei einer Änderung der Fahrpedalstellung zu erwartende Motordrehmoment eingestellt werden kann, hängt davon ab, ob die Kennlinie des Kupplungskennlinienspeichers 25 die Kupplungscharakteristik korrekt wiedergibt. Da sich die Kupplungscharakteristik nicht nur verschleißabhängig über einen längeren Zeitraum ändern kann, sondern auch temperaturabhängig während des laufenden Betriebs, ist eine Korrektureinrichtung 33 vorgesehen, die eine kontinuierliche Korrektur der Kennlinie auch während des Fahrbetriebs erlaubt. Die Korrektureinrichtung 33 macht sich zunutze, daß der Integralanteil des Reglers 19 im stationären Betrieb, d.h. bei konstant vorgegebenem Soll-Schlupf Δnₛ, den Wert null annimmt, wenn das Soll-Positionssignal s'' die Kupplung 5 korrekt auf das der Fahrpedalstellung und der Motordrehzahl entsprechende Motordrehmoment einstellen kann. Zur Korrektur der Kennlinie des Kupplungskennlinienspeichers 25 ändert die Korrektureinrichtung 33 den Wert des Positions-Sollsignals s'' schrittweise um einen geringen Bruchteil des Integralanteils im Positions-Sollsignal s', und zwar so lange, bis der Integralanteil null ist. Die Korrektur kann für unterschiedliche Drehmomentwerte der Kennlinie erfolgen, so daß auch Bereiche der Kennlinie korrigiert werden können; es kann aber auch lediglich das Positions-Sollsignal s_{g} in der Position beginnender Drehmomentübertragung der Kupplung korrigiert werden, wobei die Kennlinie durch Parallelverschieben und/oder Ändern ihrer Neigung insgesamt angepaßt werden kann. In das Diagramm des Kupplungskennlinienspeichers 25 ist gestrichelt eine in vorstehender Weise korrigierte Kennlinie eingezeichnet. Die Korrektureinrichtung 33 kann zum Erkennen der Korrekturbedürftigkeit auf das Soll-Positionssignal s, das die Ist-Position der Kupplung repräsentierende Ist-Positionssignal sowie auf den Istwert und den Sollwert des Schlupfs ansprechen.

Es bleibt nachzutragen, daß das Filter 21 auf die erste Eigenschwingung des Antriebsstrangs abgestimmt ist, um Regelschwingungen, die durch Schwingungen im Antriebsstrang, insbesondere in den niedrigen Gängen des Getriebes 3 angeregt werden können, aus dem Soll-Positionssignal s' zu eliminieren. Die Parameter des Filters 21 und auch des Reglers 19 können abhängig von der Gangstellung des Getriebes 3 änderbar sein.

## Patentansprüche

1. Anordnung zur Regelung des Schlupfs einer zwischen Motor (1) und Getriebe (3) eines Kraftfahrzeugs angeordneten, automatisierten Reibungskupplung (5), umfassend
einen die Kupplung (5) abhängig von einem Positions-Sollsignal (s) auf eine durch das Positions-Sollsignal (s) definierte Position einstellenden Positionierantrieb (7),
einen die Kupplungseingangsdrehzahl (nₘ) erfassenden Drehzahlsensor (15),
einen die Kupplungsausgangsdrehzahl (n_{g}) erfassenden Drehzahlsensor (17),
eine Schlupfregeleinrichtung (13), die das Positions-Sollsignal (s) abhängig von der momentanen Differenz der von den Drehzahlsensoren (15, 17) erfaßten Kupplungseingangsdrehzahl (nₘ) und Kupplungsausgangsdrehzahl (n_{g}) erzeugt, derart, daß die momentane Drehzahldifferenz gleich einer vorgegebenen Drehzahl-Solldifferenz ist,
**dadurch gekennzeichnet,** daß
der Schlupfregeleinrichtung (13) ein Kupplungskennlinienspeicher (25) zugeordnet ist, der ein Positions-Sollsignal (s'') in Form einer Kennlinie in Abhängigkeit von Daten speichert, die das von der Kupplung (5) in der Sollposition übertragene Drehmoment (Mₖ)repräsentieren,
daß der Kupplungskennlinienspeicher (25) das Positions-Sollsignal (s'') entsprechend dem Wert des von einer Drehmoment-Ermittlungseinrichtung (27, 29) ermittelten momentanen Drehmoments (Mₘ) des Motors (1) erzeugt
und daß die Schlupfregeleinrichtung (13) das Positions-Sollsignal (s'') des Kupplungskennlinienspeichers (25) einem von ihrem Regler (19) erzeugten Regelungssignalanteil (s') zur Erzeugung des Positions-Sollsignals (s) überlagert.

2. Anordnung nach Anspruch 1, dadurch gekennzeichnet, daß die Regelcharakteristik des Reglers (19) einen Integralanteil hat.

3. Anordnung nach Anspruch 2, dadurch gekennzeichnet, daß der Regler (19) ein Proportional-Integral-Differential-Regler (PID-Regler) ist.

4. Anordnung nach einem der Ansprüche 1 bis 3, dadurch gekennzeichnet, daß der Regelungs-Signalanteil des Reglers (19) über ein Filter (21) geführt ist, welches Frequenzen mit der 1. Eigenfrequenz des Antriebsstrangs eliminiert.

5. Anordnung nach einem der Ansprüche 1 bis 4, dadurch gekennzeichnet, daß die Drehmoment-Ermittlungseinrichtung (27, 29) einen Motorkennlinienspeicher (27) umfaßt, der die das Drehmoment repräsentierenden Daten abhängig von dem die Motordrehzahl erfassenden Drehzahlsensor (15) und einen die Stellung eines Leistungsstellglieds des Motors (1), insbesondere eines Fahrpedals (9) erfassenden Positionssensors (29) abgibt.

6. Anordnung nach einem der Ansprüche 1 bis 5, dadurch gekennzeichnet, daß am Eingang oder am Ausgang des Motorkennlinienspeichers (27) ein Zeitverzögerungsglied (31) vorgesehen ist.

7. Anordnung nach einem der Ansprüche 1 bis 6, dadurch gekennzeichnet, daß Daten für die von der Schlupfregeleinrichtung (13) vorgegebene Drehzahl-Solldifferenz in einem Schlupfkennlinienspeicher (23) in Abhängigkeit von der Motordrehzahl oder der Eingangsdrehzahl des Getriebes (3) gespeichert sind.

8. Anordnung zur Korrektur von in einem Datenspeicher (25) für die Steuerung einer automatisierten, zwischen Motor (1) und Getriebe (3) eines Kraftfahrzeugs angeordneten Reibungskupplung (5) gespeicherten Daten, die wenigstens eine Soll-Position eines Ausrückers der Kupplung (5) repräsentieren, insbesondere von Daten, die eine Grenzposition beginnender Drehmomentübertragung repräsentieren, wobei die Kupplung (5) abhängig von einem Positions-Sollsignal (s) mittels eines Positionier-Regelantriebs (7) auf eine durch das Positions-Sollsignal (s) definierte Ausrückerposition einstellbar ist, insbesondere nach einem der Ansprüche 1 bis 6,
**dadurch gekennzeichnet,** daß
Drehzahlsensoren (15, 17) vorgesehen sind, die die Eingangsdrehzahl (nₘ) und die Ausgangsdrehzahl (n_{g}) der Kupplung (5) erfassen,
daß eine Schlupfregeleinrichtung (13) vorgesehen ist, die die momentane Differenzdrehzahl zwischen erfaßter Eingangsdrehzahl (nₘ) und erfaßter Ausgangsdrehzahl (n_{g}) der Kupplung (5) für die Korrektur der gespeicherten Daten auf einem vorgegebenen Schlupf-Sollwert hält,
daß die Schlupfregeleinrichtung (13) einen Regler (19) mit integrierendem Regelcharakteristikanteil aufweist, der einem Positions-Sollsignal (s'') des Datenspeichers (25) einen Regelungs-Signalanteil (s') überlagert
und daß eine Korrektureinrichtung (33) das Positions-Sollsignal (s'') in den Datenspeicher (25) so korrigiert, daß der Integralanteil des dem Positions-Sollsignal (s'') überlagerten Regelungs-Signalanteils (s') zumindest annähernd null ist.

9. Anordnung nach Anspruch 8, dadurch gekennzeichnet, daß der Datenspeicher als Kupplungskennlinienspeicher (25) ausgebildet ist und das Positions-Sollsignal in Form einer Kennlinie in Abhängigkeit von Daten speichert, die das von der Kupplung (5) übertragene Drehmoment repräsentieren, und daß die Korrektureinrichtung (33) Bereiche der Kennlinie korrigiert.

10. Anordnung nach Anspruch 9, dadurch gekennzeichnet, daß die Korrektureinrichtung (33) die Grenzposition korrigiert und die Kennlinie relativ zur korrigierten Grenzposition ausrichtet.

11. Anordnung nach Anspruch 9 oder 10, dadurch gekennzeichnet, daß der Kennlinienspeicher (25) das Positions-Sollsignal entsprechend dem Wert des von einer Drehmoment-Ermittlungseinrichtung (27, 29) ermittelten momentanen Drehmoments des Motors (1) erzeugt und daß die Korrektureinrichtung (33) in einer Lernbetriebsart betreibbar ist, in der sie die Kennlinie in den Kennlinienspeicher (25) einschreibt.

## Claims

1. Arrangement for controlling the slip of an automatic friction clutch (5) arranged between engine (1) and gearbox (3) of a motor vehicle, comprising
a positioning drive (7) adjusting the clutch (5) in dependency on a desired position signal (5) to a position defined by the desired position signal (5),
a speed sensor (15) detecting the clutch input speed (nₘ),
a speed sensor (17) detecting the clutch output speed (n_{g}),
a slip controlling device (13) which produces the desired position signal (5) in dependency on the instantaneous difference between the clutch input speed (nₘ) detected by the speed sensors (15, 17) and the clutch output speed (n_{g}) such that the instantaneous speed difference is equal to a predetermined desired speed difference,
**characterised in that** the slip controlling device (13) is allocated a clutch characteristic curve memory (25) which stores a desired position signal (5'') in the form of a characteristic curve in dependency on data representing the torque (Mₖ) transmitted by the clutch (5) in the desired position, in that the clutch characteristic curve memory (25) produces the desired position signal (5'') corresponding to the value of the instantaneous torque (Mₘ) of the engine (1) determined by a torque-determining device (27, 29) and in that the slip controlling device (13) superimposes the desired position signal (5'') of the clutch characteristic curve memory (25) on a control signal content (5') produced by its controller (19) to produce the desired position signal (5).

2. Arrangement according to claim 1, characterised in that the control characteristic of the controller (19) has an integral content.

3. Arrangement according to claim 2, characterised in that the controller (19) is a proportional-integral-derivative controller (PID controller).

4. Arrangement according to one of claims 1 to 3, characterised in that the control signal content of the controller (19) is guided through a filter (21) which eliminates frequencies with the first inherent frequency of the power train.

5. Arrangement according to one of claims 1 to 4, characterised in that the torque determining device (27, 29) comprises an engine characteristic curve memory (27) which delivers the data representing the torque in dependency on the speed sensor (15) detecting the engine speed and a position sensor (29) detecting the position of a power setting element of the engine (1), in particular of an accelerator pedal (9).

6. Arrangement according to one of claims 1 to 5, characterised in that a time delay element (31) is provided at the input or at the output of the engine characteristic curve memory (27).

7. Arrangement according to one of claims 1 to 6, characterised in that data for the desired speed difference predetermined by the slip controlling device (13) are stored in a slip characteristic curve memory (23) in dependency on the engine speed or the input speed of the gearbox (3).

8. Arrangement for correcting data which are stored in a data memory (25) for the control of an automatic friction clutch (5) arranged between engine (1) and gearbox (3) of a motor vehicle and represent at least one desired position of release means of the clutch (5), in particular data which represent a limit position of incipient torque transmission, the clutch (5) being adjustable in dependency on a desired position signal (5) by means of a positioning control drive (7) to a released position defined by the desired position signal (5), in particular according to one of claims 1 to 6,
characterised in that speed sensors (15, 17) are provided which detect the input speed (nₘ) and the output speed (n_{g}) of the clutch (5),
in that a slip controlling device (13) is provided which keeps the instantaneous differential speed between detected input speed (nₘ) and detected output speed (n_{g}) of the clutch (5) at a predetermined desired slip value for correction of the stored data,
in that the slip controlling device (13) comprises a controller (19) with an integrating control characteristic content which superimposes a control signal content (5') on the desired position signal (5'') of the data memory (25) and
in that a correcting device (33) corrects the desired position signal (5'') in the data memory (25) such that the integral content of the control signal content (5') superimposed on the desired position signal (5'') is at least approximately zero.

9. Arrangement according to claim 8, characterised in that the data memory is designed as a clutch characteristic curve memory (25) and stores the desired position signal in the form of a characteristic curve in dependency on data representing the torque transmitted by the clutch (5) and in that the correcting device (33) corrects regions of the characteristic curve.

10. Arrangement according to claim 9, characterised in that the correcting device (33) corrects the limit position and orientates the characteristic curve relative to the corrected limit position.

11. Arrangement according to claim 9 or 10, characterised in that the characteristic curve memory (25) produces the desired position signal corresponding to the value of the instantaneous torque of the engine (1) determined by a torque determining device (27, 29) and in that the correcting device (33) can be operated in a learning manner in which it writes the characteristic curve into the characteristic curve memory (25).

## Revendications

1. Dispositif de régulation du patinage d'un embrayage à friction (5) automatisé, monté entre un moteur (1) et une boîte de vitesses (3) d'un véhicule à moteur, comprenant un mécanisme de positionnement (7) réglant l'embrayage (5), en fonction d'un signal (s) de consigne de position, sur une position définie par le signal (s) de consigne de position,
un capteur tachymétrique (15) captant la vitesse de rotation d'entrée (nₘ) de l'embrayage,
un capteur tachymétrique (17) captant la vitesse de rotation de sortie (n_{g}) de l'embrayage,
un dispositif (13) de régulation du patinage, qui génère le signal (s) de consigne de position, en fonction de la différence momentanée entre la vitesse de rotation d'entrée (nₘ) de l'embrayage et la vitesse de rotation de sortie (n_{g}) de l'embrayage captées par les capteurs tachymétriques (15, 17) de façon à ce que la différence momentanée des vitesses de rotation soit égale à une différence de consigne prédéterminée des vitesses de rotation,
caractérisé en ce qu'au dispositif (13) de régulation du patinage est associé une mémoire (25) de courbes caractéristiques d'embrayage, qui enregistre un signal (s'') de consigne de position sous la forme d'une courbe caractéristique en fonction de données représentant le couple de rotation (Mₖ) transmis par l'embrayage (5) dans la position de consigne,
en ce que la mémoire (25) de courbes caractéristiques d'embrayage génère le signal (s'') de consigne de position en fonction de la valeur du couple de rotation (Mₘ) momentané du moteur calculé par un dispositif de calcul du couple de rotation (27, 29),
et en ce qu'afin de générer le signal (s) de consigne de position, le dispositif (13) de régulation du patinage superpose le signal (s'') de consigne de position de la mémoire (25) de courbes caractéristiques d'embrayage à une composante du signal (s') de régulation généré par le régulateur (19) dudit dispositif de régulation du patinage.

2. Dispositif selon la revendication 1, caractérisé en ce que la caractéristique de régulation du régulateur (19) comporte une composante intégrale.

3. Dispositif selon la revendication 2, caractérisé en ce que le régulateur (19) est un régulateur proportionnel, intégral et différentiel (régulateur PID).

4. Dispositif selon l'une des revendications 1 à 3, caractérisé en ce que l'on fait passer la composante de signal de régulation du régulateur (19) par un filtre (21) qui élimine des fréquences comportant la première fréquence propre de la transmission.

5. Dispositif selon l'une des revendications 1 à 4, caractérisé en ce que le dispositif de calcul du couple de rotation (27, 29) comprend une mémoire (27) de courbes caractéristiques du moteur, qui fournit les données représentant le couple, en fonction du capteur tachymétrique (15) captant le régime du moteur et d'un capteur de position (29) captant la position d'un régulateur de puissance du moteur (1), en particulier d'une pédale d'accélérateur (9).

6. Dispositif selon l'une des revendications 1 à 5, caractérisé en ce qu'un organe de temporisation (31) est prévu à l'entrée ou à la sortie de la mémoire (27) de courbes caractéristiques du moteur.

7. Dispositif selon l'une des revendications 1 à 6, caractérisé en ce que des données nécessaires à la différence de consigne des vitesses de rotation donnée par le dispositif (13) de régulation du patinage sont enregistrées dans une mémoire (23) de courbes caractéristiques de patinage, en fonction du régime du moteur ou de la vitesse de rotation d'entrée de la boîte de vitesses (3).

8. Dispositif de correction des données enregistrées dans une mémoire de données (25), afin de commander un embrayage à friction (5) automatisé, monté entre un moteur (1) et une boîte de vitesses (3) d'un véhicule à moteur, lesdites données représentant au moins une position de consigne d'un organe de débrayage de l'embrayage (5), en particulier des données qui représentent une position limite d'une transmission naissante du couple de rotation, l'embrayage (5) pouvant être réglé en fonction d'un signal (s) de consigne de position, au moyen d'un mécanisme (7) de réglage de positionnement, sur une position de l'organe de débrayage définie par le signal (s) de consigne de position, en particulier selon l'une des revendications 1 à 6,
caractérisé en ce que des capteurs tachymétriques (15, 17), qui captent la vitesse de rotation d'entrée (nₘ) et la vitesse de rotation de sortie (n_{g}) de l'embrayage (5), sont prévus,
en ce qu'un dispositif (13) de régulation du patinage est prévu, qui maintient la différence momentanée entre la vitesse de rotation d'entrée (nₘ) captée et la vitesse de rotation de sortie (n_{g}) captée, de l'embrayage (5), à une valeur de consigne du patinage prédéterminée, afin de corriger les données enregistrées,
en ce que le dispositif (13) de régulation du patinage présente un régulateur (19) comportant une partie intégrante de courbe de régulation et qui superpose une partie (s') de signal de régulation à un signal (s'') de consigne de position de la mémoire de données (25),
et en ce qu'un dispositif correcteur (33) corrige le signal (s'') de consigne de position dans la mémoire de données (25) d'une manière telle que la composante intégrale de la partie du signal de régulation (s') superposée au signal (s'') de consigne de position est au moins approximativement égale à zéro.

9. Dispositif selon la revendication 8, caractérisé en ce que la mémoire de données est configurée comme une mémoire (25) de courbes caractéristiques d'embrayage et enregistre le signal de consigne de position sous la forme d'une courbe caractéristique, en fonction de données qui représentent le couple de rotation transmis par l'embrayage (5), et en ce que le dispositif correcteur (33) corrige des zones de la courbe caractéristique.

10. Dispositif selon la revendication 9, caractérisé en ce que le dispositif correcteur (33) corrige la position limite et aligne la courbe caractéristique par rapport à la position limite corrigée.

11. Dispositif selon la revendication 9 ou 10, caractérisé en ce que la mémoire (25) de courbes caractéristiques génère le signal de consigne de position en fonction de la valeur du couple de rotation momentané du moteur (1) calculé par un dispositif de calcul du couple de rotation (27, 29), et en ce que le dispositif correcteur (33) peut être mis en oeuvre selon un mode autodidactique, dans lequel ledit dispositif inscrit la courbe caractéristique dans la mémoire (25) de courbe caractéristique.
